(19) Europäisches Patentamt
European Patent Office
Office européen des brevets

(11) EP 1 468 725 B1

(12) # EUROPÄISCHE PATENTSCHRIFT

(45) Veröffentlichungstag und Bekanntmachung des Hinweises auf die Patenterteilung:
**12.11.2008 Patentblatt 2008/46**

(51) Int Cl.:
***B01D 71/02*** *(2006.01)*

(21) Anmeldenummer: **04090130.8**

(22) Anmeldetag: **02.04.2004**

(54) **Hochtrennende Molekularsiebmembran für Gase und Dämpfe und Verfahren zu ihrer Herstellung**

Highly efficient molecular sieve membrane for gases and steams and process for its production

Membrane moleculaire à haut pouvoir de séparation pour gaz et vapeurs, et procédé pour sa fabrication

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.04.2003 DE 10318372**

(43) Veröffentlichungstag der Anmeldung:
**20.10.2004 Patentblatt 2004/43**

(73) Patentinhaber: **BASF SE**
**67056 Ludwigshafen (DE)**

(72) Erfinder:
- **Noack, Manfred Dr.**
  **12683 Berlin (DE)**
- **Schäfer, Ronald, Dr.**
  **73430 Aalen (DE)**
- **Kölsch, Peter, Dr.**
  **10367 Berlin (DE)**
- **Toussaint, Petra**
  **12489 Berlin (DE)**
- **Stelzer, Jean Boris, Dr.**
  **12167 Berlin (DE)**
- **Ballschuh, Detlef, Dr.**
  **12524 Berlin (DE)**

(74) Vertreter: **Huhn, Michael et al**
**Isenbruck Bösl Hörschler Wichmann Huhn**
**Patentanwälte**
**Theodor-Heuss-Anlage 12**
**68165 Mannheim (DE)**

(56) Entgegenhaltungen:
**EP-A- 0 515 936** **US-A- 5 935 646**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 468 725 B1

Printed by Jouve, 75001 PARIS (FR)

## Beschreibung

Die Erfindung betrifft hochtrennende Molekularsiebmembranen für Gase und Dämpfe, die zur größenselektiven Trennung von Gasgemischen, zur Wechselwirkungstrennung von Gasgemischen und zur katalytischen Isomerisierung, Zyklisierung, Partialoxidation und beim Cracken von Gasen und Dämpfen oder Gasgemischen ohne externen Katalysator eingesetzt werden können.

Außer dem MFI-Typ mit einem breit einstellbaren Si/Al-Verhältnis sind alle anderen Molsieb-Membranen Al-reich (Si/Al < 5). Von ihnen ist eine gute Trennung wäßrigorganischer Gemische durch Pervaporation bekannt (Kita; H. Proc..Intern.Workshop on Zeolitic Membranes and Films, Grifu, Japan, 1998, S. 43), selbst dann, wenn die Membranschichten nicht phasenrein kristallisieren. Eine größenselektive Trennung an den durch die Kristallstruktur vorgegebenen monodispersen Poren läßt sich nur an der Al-armen MFI-Struktur der Silikalithschicht nachweisen (Burggraaf et al., Fundamentals of Inorganic Membrane Science Technology, Elsevier, Amsterdam 1996, S. 331-453), A., Transpor. Alreiche Molsieb-Membranen sind daher allgemein nicht für die Gas/Gas-, Gas/Dampf- oder Dampf/Dampf-Trennung geeignet, da sie infolge des Auftretens von Mesoporen die entsprechenden Trennfaktoren nicht erreichen.

EP-A 0 515 936 beschreibt Verfahren zur Herstellung mikroporöser Keramikmembranen.
US-A 5 935 646 beschreibt Verfahren zur Herstellung von Silica Molekularsiebmembranen.

Der Erfindung liegt die Aufgabe zugrunde, neue Trennmembranen bereitzustellen, die auf Basis bekannter Zeolithtypen Gas/Gas-, Gas/Dampf oder Dampf-Dampftrennungen ermöglichen sowie ein Herstellungsverfahren für diese Membranen.

Erfindungsgemäß ist die hochtrennende Molekularsiebmembran für Gase und Dämpfe dadurch gekennzeichnet, dass die Membran, bestehend aus einem silikatischen Zeolith mit einem Verhältnis Si:Al von 1-300, in der Oberflächenschicht der Funktionsseite aus Zeolithporen im Bereich von 0,36 bis 0,74 nm Porendurchmesser besteht und im wesentlichen mesoporenfrei ist, gemessen durch Permporosimetrie und Einzelgaspermeation und die Membran eine Trennwirkung von wenigstens 100 % oberhalb des Knudsen-Faktors hat und herstellbar ist durch templatgesteuerte oder templatfreie Kristallisation des Synthesegels als Schicht auf der Funktionsseite eines offenporigen Trägers mit asymmetrischen Schichtaufbau im offenen oder geschlossenen System bei 50-250 °C in Anwesenheit von verwachsungsfördernden, wasserlöslichen, chemisch und thermisch bis 200 °C beständigen, aliphatischen oder aromatischen Polyammoniumsalzen mit jeweils wenigstens zwei Ammoniumfunktionen im Molekül und einem Molekulargewicht im Bereich von 100 bis 1000 g/mol und nachfolgender Temperaturbehandlung bei 100 bis 550 °C unter Öffnen der Transportporen durch Wasserstoffdesorption und/oder unter Zersetzung des Templats und der verwachsungsfördernden Verbindung bis zum Erhalt der vollständigen Molekularsiebstruktur.

Die Erfindungsgemäße Membran kann dem Typ LTA (Si/Al=1), FAU (Faujasit NaX, Si/Al=1-1,25; Faujasit NaY, Si/Al=1,25-2,5), ERI (Erionit, Si/Al=3,5), MOR (Mordenit, Si/Al=5), OFF (Offretit, Si/Al=3,5), CHA (Chabasit, Si/Al=2), ANA (Si/Al=2), FER (Ferrierit, Si/Al=3,5) oder MFI (ZSM-5, Si/Al=15-250) entsprechen. Bevorzugt sind die Typen LTA, FAU, ERI, MOR, BETA oder ZSM-5 mit Si/Al-Verhältnissen von 1-250.

Ein bevorzugtes Si/Al-Verhältnis liegt im Bereich von 1 bis 100, insbesondere 1-15.

Die Trennwirkung liegt vorzugsweise 200 % oberhalt des Knudsen-Faktors. Sie kann jedoch auch bis zu 800 % oberhalb dieses Faktors liegen.

Eine besondere Ausführungsform der Erfindung besteht darin, dass die Membran mesoporenfrei und heteroatomhaltig ist. Vorteilhaft können im silikatischen Zeolithgitter neben Al(III) auch weitere Heteroatome eingebaut werden, wobei die Heteroatome ausgewählt sind unter Bor(III), Eisen(III), Titan(IV), Vanadium(V) und Germanium(IV). Dabei wird Ge gegen Si ausgetauscht.

Der Austauschgrad der Heteroatome wird durch ihre Größe und Ladung und den Zeolithtyp bestimmt. Der Austauschgrad ist dem Fachmann bekannt. So sind beispielsweise für den Typ MFI folgende Austauschgrade bekannt: Si/Fe=15, Si/Ti=70-75, Si/B=100, Si/Al=15-unendlich.

Durch den Eintausch von Heteroatomen werden die Membranen katalytisch aktiv. B(III), Al (III), Fe(III) und Ge (IV) verursachen saure Zentren mit abgestufter Acidität für Reaktionen wie Isomerisierungen, Zyklisierungen oder Crakken. Ti(III) und V(III oder V)-Eintausch schafft Redoxzentren für Oxidationsreaktionen.

Die erfindungsgemäße Membran ist im wesentlichen mesoporenfrei, d.h der Anteil der Mesoporen ist so gering, daß die Permselektivität mindestens 100% über dem Knudsen-Faktor liegt. Unter Mesoporen werden Poren verstanden, deren Durchmesser im Bereich von >2 bis 50 nm liegt.

Durch Analyse von Permeationsdaten aus der Literatur und eigenen Messungen bei Korrelation zum Si/Heteroatom-Verhältnis wurde der Zusammenhang vorn Heteroatomgehalt zum Mesoporenanteil (ausgedrückt durch die Permselektivität in Relation zum Knudsenfaktor) festgestellt. Durch Zeta-Potentialmessungen in Ph-Abhängigkeit wurde ein Anstieg der negativen Oberflächenladung der Zeolith-Kristalle mit steigendem Heteroatomgehalt im Ph-Bereich der Zeolith-Synthese Ph 10-14 festgestellt. Das Zeta-Potential ist Ausdruck der Oberflächenladung von Partikeln in Elektrolytlösungen. Da auch die silikatischen Kristallbausteine mit Heteroatomen negativ geladen sind, wird bei geringem Kristallabstand die konzentrationsbestimmte Diffusion dieser Bausteine zu den Kristalliten durch die elektrostatische

Abstoßung unterdrückt, so daß zwangsläufig Mesoporen in heteroatomhaltigen Zeolith-Kristallschichten verbleiben. Verwachsungsfördemde Substanzen (VFS) laden vermutlich die Kristallitoberflächen um, der Transport der anionischen Kristallbausteine zu den Kristall-Grenzflächen wird verbessert und damit der Mesoporenanteil minimiert.

Die Mesoporenfreiheit wird in Anwesenheit von Heteroatomen, wie Al, Fe, B, Ti, V und/oder Ge dadurch erreicht, daß zu Beginn oder während der Synthese der Membran diese verwachsungsfördernden Verbindungen (VFS) zugegeben werden. Diese Verbindungen müssen folgende Voraussetzungen erfüllen:

- mehrfach positiv geladen,
- geringes Molekulargewicht, damit kleines Molvolumen, weshalb beim thermischen Abbau keine Mesoporen entstehen,
- wasserlöslich und chemisch beständig in der Syntheselösung,
- unterschiedliches Adsorptionsverhalten von der Molekulargröße her, die etwa der dispersiven Wechselwirkung entspricht und von der Molekülgestalt her (linear, faltbar, planar), die stark den entropischen Sorptionsterm beeinflußt, damit die makroskopische Kristalloberfläche stark und die mikroskopische Bausteinoberfläche schwach beeinflußt wird.

Die Wirkung der VFS während der Schichtkristallisation ist deutlich zu unterscheiden vom Einsatz des umladenden Poly-DADMAC (Poly-diallyldimethylammoniumchlorid) mit einem Molekulargewicht von etwa 100.000 zum Anheften der Seeds vor der Synthese. Sie unterscheidet sich auch von der organisierenden Wirkung der Templatmoleküle zur Ausbildung der Kristallstruktur der Einzelkristalle.

Die VFS bewirken eine Umladung der Kristalloberflächen von negativ nach positiv, und dadurch wird ein verbesserter Antransport anionischer Synthesebausteine erreicht. Damit würden die Mesoporen geschlossen und der Trennfaktor deutlich erhöht.

Unter Trennfaktor $\alpha$ wird das Konzentrationsverhältnis $c_{1/}c_2$ im Permeat zum Konzentrationsverhältnis $c_{1/}c_2$ im Feed verstanden. Der Knudsen-Faktor (KF) ist definiert als Quadratwurzel aus dem Verhältnis der Molekulargewichte der Gemischkomponenten

$$KF = \sqrt{M_1/M_2}$$

wobei als $M_1$ stets das höhere Molekulargewicht eingesetzt wird.

Die Beurteilung der Qualität der Membranen erfolgt durch Einzelgasmesssungen von Molekülen mit verschiedenem kinetischen Durchmesser und Wechselwirkungsenergie und Vergleich der aus den Einzelgasflüssen berechneten Permselektivität mit dem Knudsenfaktor der Komponenten, oder sie erfolgt durch Messung ausgewählter binärer Gemische in Temperatur-Zusammensetzungsabhängigkeit für die größenselektive Wechselwirkungstrennung.

Die direkte Bestimmung des Mesoporenanteils erfolgt durch die Permporosimetrie. Dabei wird eine Membranschicht mit einem Inertgas (He oder $H_2$) beaufschlagt, der Gasfluß gemesssen und stufenweise ein Fremdgas (z.B. n-Hexan mit steigendem Partialdruck) zugeführt. Die Partialdruckerhöhung des Fremdgases führt zu einer stufenweisen Verstopfung der engen Poren, und der nur noch durch die größeren Poren (die Mesoporen) auftretende Gasfluß wird gemessen. Wenn keine Mesoporen vorhanden sind, ist der Gasfluß von Inertgas und Fremdgas, z.B. n-Hexan schon bei geringem Partialdruck von z.B. n-Hexan nur auf den n-Hexanfluß begrenzt.

Die Erfindung betrifft weiterhin ein Verfahren zur Herstellung von Molekularsiebmembranen, bestehend aus einem silikatischen Zeolith mit einem Verhältnis Si:Al von 1-300, der in der Oberflächenschicht der Funktionsseite aus Zeolithporen im Bereich von 0,36 bis 0,74 nm Porendurchmesser besteht und im wesentlichen mesoporenfrei ist, gemessen durch Permporosimetrie und Einzelgaspermeation, und die Membran eine Trennwirkung von wenigstens 100 % oberhalb des Knudsen-Faktors hat, wobei das Verfahren durch templatgesteuerte oder templatfreie Kristallisation des Synthesegels als Schicht auf der Funktionsseite eines offenporigen Trägers mit asymmetrischen Schichtaufbau im offenen oder geschlossenen System bei 50-250 °C und nachfolgender Temperaturbehandlung bei 100 bis 550 °C unter Öffnen der Transportwege durch Wasserstoffdesorption und/oder Zersetzung nicht beständiger organischer Verbindungen erfolgt und dadurch gekennzeichnet ist, daß vor oder während der Synthese verwachsungsfördernde, wasserlösliche, chemisch und thermisch bis 200 °C beständige, aliphatische oder aromatische Polyammoniumsalze mit jeweils wenigstens zwei Ammoniumfunktionen im Molekül und einem Molekulargewicht im Bereich von 100 bis 1000 zugesetzt werden.

Der bevorzugte Temperaturbereich für die Kristallisation liegt bei 80-200 °C.

Unter dem Begriff "Funktionsseite" wird diejenige Oberfläche bzw. die Oberflächen eines offenporigen Formkörpers verstanden, die die Filter-Funktion des Trägers in seiner Anwendung als Trennmembran für Gase und/oder

Dämpfe übernimmt. Es ist die Oberfläche, die dem Feed eines zu trennenden gasförmigen oder dampfförmigen Stoffsystems zugewandt ist. Es ist zugleich die feinporigste Schicht eines Formkörpers mit asymmetrischem Schichtaufbau.

Unter dem Begriff "asymmetrischer Schichtaufbau" wird ein Aufbau verstanden, der ausgehend vom grobporigen Grundkörper eine zu einer Seite hin abnehmende Porengröße hat, so daß die Poren an der Oberfläche der äußersten Schicht einer Seite den kleinsten Durchmesser aufweisen. Diese äußerste Schicht stellt zugleich die Funktionsseite des Körpers dar. Die Porengröße in der äußersten Schicht liegt etwa im Bereich von 5 bis 1000 nm, vorzugsweise 5-200 nm. Auf dieser äußersten Schicht erfolgt die Abscheidung der Molekularsiebmembran.

Bevorzugt werden in dem erfindungsgemäßen Verfahren als verwachsungsfördende Substanzen kurzkettige Ionene oder quaternäre Polyammoniumsalze zugesetzt. Dazu gehören z.B. solche Verbindungen wie N,N,N',N'-Tetramethylpiperazonium-dijodid, Hexamethylethylendiammonium-dijodid, Hexamethylenethylendiammonium-di-methosulfat, Hexamethylethylendiammonium-dihydroxid, Poly-[N,N-dimethyl-2-hydroxy-propylen-(1,3)-ammoniumchlorid), Additionsprodukte von aliphatischen $C_2$-$C_6$-tert.-Diaminen mit Dibrommethan oder p-Xylidendichlorid bzw. $\alpha,\omega$-Dihalogenalkanen mit bis zu 6 Kohlenstoffatomen, und Gemische davon.

Weitere Beispiele für derartige Verbindungen sind Additionsprodukte von [Ethylendimethyldiamin mit Dibrommethan

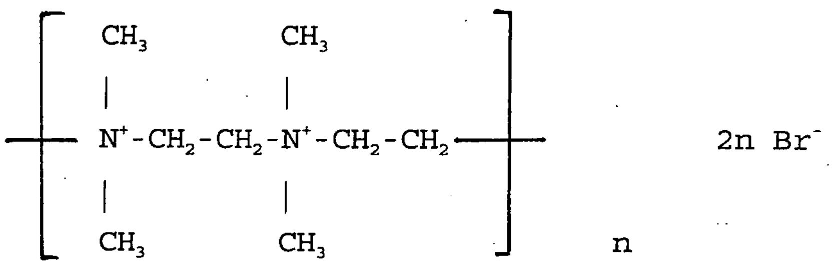

(MG 260 g/mol, linear, faltbar);
Additionsprodukte von Ethylendimethyldiamin mit p-Xylidendichlorid

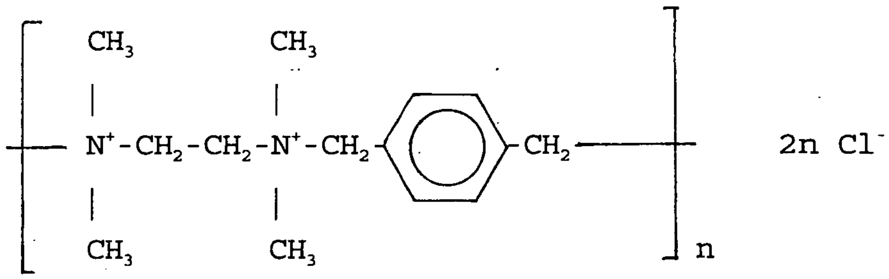

(MG 336 g/mol, teilplanar);
das Reaktionsprodukt von Tetramethylethylendiamin mit Jodmethan (Hexamethylethylendiammonium-dijodid)

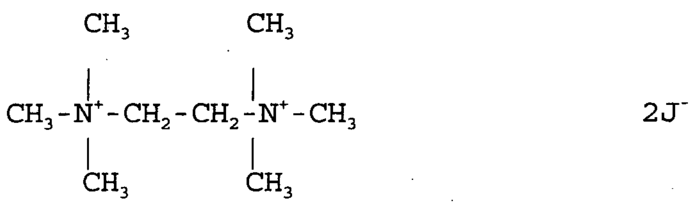

(MG 146 g/mol; linear); oder
das Reaktionsprodukt von Dimethylamin mit Epichlorhydrin zu Poly-[N,N-dimethyl-2-hydroxy-propylen-(1,3)-ammoniumchlorid]

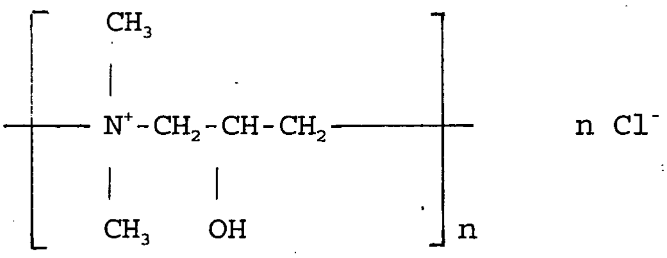

(MG 173 g/mol, linear, faltbar, mit Wasserstoffbrückenbindung zur Zeolithfläche).

Die angegebenen Molekulargewichte beziehen sich auf den kationischen Molekülteil.

Als Anionen kommen vorzugsweise Chlorid, Bromid, Jodid, Methosulfat oder Hydroxid in Frage.

Bei dem erfindungsgemäßen Verfahren kann dem Synthesegel wahlweise Al(III), Bor(III), Eisen(III), Titan(IV), Vanadium(III oder V) oder Germanium(IV) zugesetzt werden. Wie bereits ausgeführt, ist die maximale prozentuale Substitution von den $SiO_2$-Gitterbausteinen durch die Oxide der Heteroatome abhängig von ihrer Größe und Ladung und dem zeolithischen Gittertyp.

Die verwachsungsfördernden Verbindungen können durch Tränken des geseedeten Trägers vor der Synthese, zu Beginn der Synthesezeit oder gegen Ende der Synthesezeit zugegeben werden. Die Zugabe kann bevorzugt in Konzentrationen von 0,01 bis 1 N, vorzugsweise 0,01 bis 0,1 N erfolgen.

Gegenstand der Erfindung ist weiterhin die Verwendung der erfindungsgemäßen Membranen zur größensselektiven Trennung von Gas- oder Dampfgemischen, zur Wechselwirkungstrennung von Gas- oder Dampfgemischen und zur katalytischen Isomerisierung, Zyklisierung, Partialoxidation und beim Cracken von Gasen, Dämpfen oder Gas/Dampfgemischen. Beim katalytischen Einsatz der Membranen werden bevorzugt Heteroatome der oben beschriebenen Art in den Membranen gegen Siliciumgitteratome ausgetauscht.

Die Erfindung soll nachstehend durch Beispiele näher erläutert werden.

<u>Beispiel 1</u>

Eine MFI-Membran mit einem Si/Al-Verhältnis von 96 wird auf einem porösen keramischen $\alpha$-$Al_2O_3$-Träger mit 60 nm Poren in der Deckschicht durch zweistufige Kristallisation unter Verwendung von Seedkristallen präpariert. Das Synthesegel hat folgende molare Verhältnisse:
Si/Al = 96, $H_2O/SiO_2$ = 20, Si/$TPA^+$=15, $OH^-$/Si = 0,077. Die Synthesebedingungen sind T = 180°C, t = 48 h.

In dem Synthese-Autoklaven wird Hexamethylethylendiammonium-dijodid als verwachsungsfördernde Substanz zu Beginn der Synthese zugesetzt. Folgende Permeationsdaten werden bei 105 °C und einem Transmembrandruck von 1 bar ermittelt.

| | ohne VFS | mit VFS |
|---|---|---|
| $H_2$-Fluss [l/$m^2$ h bar] | 957 | 450 |
| Permselektivität | | |
| Wasser/n-Propanol | 7,3 | 35,6 |

Bei einem Knudsen-Faktor von etwa 5,5 liegt die Trennwirkung der erfindungsgemäßen Membran etwa beim 6-7-fachen Knudsenfaktor.

<u>Beispiel 2</u>

Eine MFI-Membran mit einem Si/Al-Verhältnis von 15 wird auf einem porösen keramischen $\alpha$-$Al_2O_3$-Träger mit 60 nm Poren in der Deckschicht durch zweistufige Kristallisation unter Verwendung von Seedkristallen präpariert. Das Synthesegel hat folgende molare Verhältnisse:
Si/Al = 15, $H_2O/SiO_2$ = 77, Si/$TPA^+$ = 3,6, $OH^-$/Si = 5,7.
Die Synthesebedingungen sind T = 180°C, t = 96 h.
[U. Müller, K. K. Unger, Zeolites 8, 1988, 154).

Der entstehende $NH_4$-ZSM-5 läßt sich durch Tempern leicht in die HZSM-5-Form überführen. Als VFS wird ein polares Reaktionsprodukt aus Epichlorhydrin und Dimethylamin (Poly-[N,N-dimethyl-2-hydroxy-propylen-(1,3)-ammoniumchlorid]) mit einem Molekulargewicht von 350-700 g/mol eingesetzt. Die erhaltene alkoholische OH-Gruppe

verstärkt über Wasserstoffbrückenbindung zu OH-Gruppen des ZSM-5-Kristalls die Oberflächenadsorption. Bei der thermischen Nachbehandlung werden sowohl das Templat als auch die VFS und das $NH4^+$ zersetzt.

Das Wachstum der aluminiumreichen ZSM-Kristalle ist deutlich langsamer. Die Verwachsung zur Schicht wird durch die gewählte VFS anfangs gestört. Erst eine Zugabe nach etwa 90 h ergibt gut verwachsene Kristallschichten.

Beispiel 3

Eine FAU-Membran mit einem Si/Al-Verhältnis von 2,5 wird auf einem porösen keramischen $\alpha$-$Al_2O_3$-Träger mit 60 nm Poren in der Deckschicht durch zweistufige Kristallisation unter Verwendung von Seedkristallen präpariert. Das Synthesegel hat folgende molare Verhältnisse:
Si/Al = 5, $H_2O/SiO_2$ = 84, $OH^-/Si$ = 2,8.
Die Synthesebedingungen sind: T = 90°C, t = 12 h bei konventionellem Heizen und 120°C für 2 h in der Mikrowelle mit 2,45 GHz.
[Lassinantti et al., Microp.Mesop.Mater. 38, 2000, 25-34; Weh, Noack, Sieber, Caro, Micropor.Mesopor. Mater. 54, 2002, 27-36]

Als VFS werden N,N,N',N'-Tetramethylpiperazoniumverbindungen eingesetzt ($OH^-$ oder $Br^-$) Für eine verbesserte Kristallverwachsung, d.h. eine mesoporenfreie Membran ist die Konzentration im Bereich von 0,01N bis 0,1N zu variieren. Die Zugabe der VFS erfolgt durch Tränken des geseedeten Trägers oder durch Zugabe vor der Synthese.

Beispiel 4

Eine LTA-Membran mit einem Si/Al-Verhältnis von 1 wird auf einem porösen keramischen $\alpha$-$Al_2O_3$-Träger mit 60 nm Poren in der Deckschicht durch zweistufige Kristallisation unter Verwendung von Seedkristallen präpariert. Das Synthesegel hat folgende molare Verhältnisse:
Si/Al = 2,5, $H_2O/SiO_2$ = 80, $Si/TMA^+$ = 0,3, $OH^-/Si$ = 3,3. Die Synthesebedingungen sind T=98 °C, t = 30 h.
[J. Hedlund, B. Schoeman, J. Sterte, Chem.Commun.1997, 1194] Es entstehen ca. 1 $\mu$m Kristalle, die schlecht verwachsen sind. Ein Zusatz von VFS gegen Ende der Synthesezeit führt zu einer verbesserten Verwachsung. Die VFS ist ein Additionsprodukt aus Tetramethylethylendiamin und Dibrommethan mit einem Molekulargewicht zwischen 500-800 g/mol. Die Polyammoniumbromverbindung muß für die LTA-Membransynthese in die Hydroxidform überführt werden, damit die Gesamtalkalität des Synthesegels konstant bleibt. Erst bei weiterer Verlängerung (Verdoppelung) der Synthesezeit ergibt sich eine Verbesserung der Permselektivität für $H_2/SF_6$.

Beispiel 5

Eine LTA-Membran mit einem Si/Al-Verhältnis von 1 wird auf einem porösen keramischen $\alpha$-$Al_2O_3$-Träger mit 60 nm Poren in der Deckschicht durch zweistufige Kristallisation unter Verwendung von Seedkristallen präpariert, Das Synthesegel hat folgende molare Verhältnisse:
Si/Al = 1, $H_2O/SiO_2$ = 72, $OH^-/Si$ = 3. Die Synthesebedingungen sind T = 98 °C, t = 16 h bei konventionellem Heizen und können auf 2 h verkürzt worden bei der Anwendung eines Labormikrowellenofens.
[H. Kita, K.I. Okamoto, US-Patent 5.554.286].

Die VFS wird nach 12 h bei konventionellem Heizen oder nach 90 min in der Mikrowelle zugefügt. Die VFS muß in der Hydroxidform verwendet werden. Als VFS wird eine Additionsverbindung aus Tetramethylethylendiamin und p-Xylidendichlorid mit einem Molekulargewicht zwischen- 400-600 g/mol eingesetzt. Der Wasserstofffluss geht nach VFS-Einsatz um den Faktor 4 zurück, die Permselektivität für $H_2/SF_6$ steigt auf den 3-fachen Knudsenfaktor, also ca. 25 an.

**Patentansprüche**

1. Hochtrennende Molekularsiebmembran für Gase und Dämpfe, **dadurch gekennzeichnet, dass** die Membran, bestehend aus einem silikatischen Zeolith mit einem Verhältnis Si:Al von 1-300, in der Oberflächenschicht der Funktionsseite aus Zeolithporen im Bereich von 0,36 bis 0,74 nm Porendurchmesser besteht und im wesentlichen mesoporenfrei ist, gemessen durch Permporosimetrie und Einzelgaspermeation, und die Membran eine Trennwirkung von wenigstens 100% oberhalb des Knudsen-Faktors hat und herstellbar ist durch templatgesteuerte oder templatfreie Kirstallisation des Synthesegels als Schicht auf der Funktionsseite eines offenporigen Trägers mit asymmetrischem Schichtaufbau im offenen oder geschlossenen System bei 50-250 °C in Anwesenheit von verwachsungsfördernden, wasserlöslichen, chemisch und thermisch bis 200 °C beständigen, aliphatischen oder aromatischen Polyammoniumsalzen mit jeweils wenigstens zwei Ammoniumfunktionen im Molekül und einem Molekulargewicht im Bereich von 100 bis - 1000 g/mol, und nachfolgender Temperaturbehandlung bei 100 bis 550 °C unter Öffnen der Transportporen durch Wasserstoffdesorption und/oder unter Zersetzung des Templats und der verwachsungsfördernden Verbindungen bis zum Erhalt der vollständigen Molekularsiebstrukur.

**2.** Membran nach Anspruch 1, **dadurch gekennzeichnet, dass** das Gitter-$SiO_2$ durch ein oder mehrere weitere Heteroatome ausgetauscht ist, wobei die Heteroatome ausgewählt sind unter Aluminium(III), Bor(III), Eisen(III), Titan(IV), Vanadium(V) und Germanium(IV).

**3.** Membran nach Anspruch 1, **dadurch gekennzeichnet, dass** das Si/Al-Verhältnis im Bereich von 1 bis 300, vorzugsweise 1-100 liegt.

**4.** Membran nach Anspruch 1, **dadurch gekennzeichnet, dass** sie dem Typ LTA, FAU, ERI, MOR, OFF, CHA, ANA, FER oder ZSM-5 entspricht, vorzugsweise LTA, FAU oder MFI.

**5.** Verfahren zur Herstellung von Molekularsiebmembranen nach Anspruch 1 durch templatgesteuerte oder templatfreie Kristallisation des Synthesegels als Schicht auf der Funktionsseite eines offenporigen Trägers mit asymmetrischem Schichtaufbau im offenen oder geschlossenen System bei 50-250 °C und nachfolgender Temperaturbehandlung bei 100 bis 550 °C unter Öffnen der Transportwege durch Wasserstoffdesorption und/oder unter Zersetzung nicht beständiger organischer Verbindungen, **dadurch gekennzeichnet, dass** vor oder während der Synthese verwachsungsfördernde, wasserlösliche, chemisch und thermisch bis 200 °C beständige, aliphatische oder aromatische Polyammoniumsalze mit jeweils wenigstens zwei Ammoniumfunktionen im Molekül und einem Molekulargewicht im Bereich von 100 bis 1000 g/mol zugesetzt werden.

**6.** Verfahren nach Anspruch 5, **dadurch gekennzeichnet, dass** als verwachsungsfördernde Substanzen kurzkettige Ionene quaternäre Polyammoniumsalze zugesetzt werden.

**7.** Verfahren nach Anspruch 6, **dadurch gekennzeichnet, dass** die verwachsungsfördernden Substanzen ausgewählt werden aus der Gruppe, bestehend aus N,N,N',N'-Tetramethylpiperazonium-dijodid, Hexamethylethylendiammonium-dijodid, Hexamethylethylendiammoniumdihydroxid, (Poly-[N,N-dimethyl-2-hydroxypropylen-(1,3)-ammoniumchlorid], Additionsprodukten von aliphatischen $C_2$-$C_6$-Dimethyldiaminen mit Dibrommethan oder p-Xylidendichlorid, und Gemischen davon.

**8.** Verfahren nach Anspruch 5, **dadurch gekennzeichnet, dass** als Anionen der verwachsungsfördernden Substanzen Chlorid, Bromid, Jodid oder Hydroxid eingesetzt werden.

**9.** Verfahren nach Anspruch 5, **dadurch gekennzeichnet, dass** das Silicium im Synthesegel teilweise durch Aluminium(III), Bor, Eisen(III), Titan(IV), Vanadium(V) oder Germanium(IV) ersetzt wird.

**10.** Verfahren nach Anspruch 5, **dadurch gekennzeichnet, dass** die verwachsungsfördernden Verbindungen durch Tränken des geseedeten Trägers vor der Synthese, zu Beginn der Synthesezeit oder gegen Ende der Synthesezeit zugegeben werden.

**11.** Verfahren nach Anspruch 6, **dadurch gekennzeichnet, dass** die verwachsungsfördernden Verbindungen in Konzentrationen von 0,001-1 N, vorzugsweise 0,01 bis 0,1 N zugegeben werden.

**12.** Verwendung der Membranen nach einem der Ansprüche 1 bis 4 zur größenselektiven Trennung von Gas- oder Dampfgemischen, zur Wechselwirkungstrennung von Gas- oder Dampfgemischen und zur katalytischen Isomerisierung, Zyklisierung, Partialoxidation und beim Cracken von Gasen, Dämpfen oder Gas/Dampfgemischen.

## Claims

**1.** A high-efficiency molecular sieve membrane for gases and vapors, **characterized in that** the membrane, consisting of a silicatic zeolite having an Si:A1 ratio of 1-300, in the surface layer of the functional side consists of zeolite pores ranging from 0.36 to 0.74 nm in pore diameter and is essentially mesopore-free, measured by permporosimetry and single gas permeation, and the membrane has a separation efficiency of at least 100% above the Knudsen factor and is obtainable by template-controlled or template-free crystallization of the synthesis gel as a layer on the functional side of an open-pore carrier of asymmetric layered construction in an open or closed system at 50-250°C in the

presence of intergrowth-promoting, water-soluble, aliphatic or aromatic polyammonium salts which are stable chemically and thermally up to 200°C and each have at least two ammonium functions in the molecule and a molecular weight in the range from 100 to 1000 g/mol, and subsequent heat treatment at 100 to 550°C to open the transportation pores through hydrogen desorption and/or to decompose the template and the intergrowth-promoting compounds until the complete molecular sieve structure is obtained.

**2.** A membrane according to claim 1, **characterized in that** the lattice $SiO_2$ is replaced by one or more further heteroatoms selected from aluminum(III), boron(III), iron(III), titanium(IV), vanadium(V) and germanium(IV).

**3.** A membrane according to claim 1, **characterized in that** the Si/A1 ratio is in the range from 1 to 300, preferably 1-100.

**4.** A membrane according to claim 1, **characterized in that** it corresponds to the LTA, FAU, ERI, MOR, OFF, CHA, ANA, FER or ZSM-5 type, preferably to the LTA, FAU or MFI type.

**5.** A process for producing molecular sieve membranes according to claim 1 by template-controlled or template-free crystallization of the synthesis gel as a layer on the functional side of an open-pore carrier of asymmetric layered construction in an open or closed system at 50-250°C and subsequent heat treatment at 100 to 550°C to open the transportation paths through hydrogen desorption and/or to decompose nonstable organic compounds, **characterized in that** intergrowth-promoting, water-soluble, aliphatic or aromatic polyammonium salts which are stable chemically and thermally up to 200°C and each have at least two ammonium functions in the molecule and a molecular weight in the range from 100 to 1000 g/mol are added before or during the synthesis.

**6.** A process according to claim 5, **characterized in that** short-chain ionenes or quaternary polyammonium salts are added as intergrowth-promoting substances.

**7.** A process according to claim 6, **characterized in that** the intergrowth-promoting substances are selected from the group consisting of N,N,N',N'-tetramethylpiperazonium diiodide, hexamethylethylenediammonium diiodide, hexamethylethylenediammonium dihydroxide, poly(N,N-dimethyl-2-hydroxy-1,3-propylene-ammonium chloride), addition products of aliphatic $C_2$-$C_6$-dimethyldiamines with dibromomethane or p-xylidene dichloride and mixtures thereof.

**8.** A process according to claim 5, **characterized in that** chloride, bromide, iodide or hydroxide are used as anions for the intergrowth-promoting substances.

**9.** A process according to claim 5, **characterized in that** the silicon in the synthesis gel is partly replaced by aluminum (III), boron, iron(III), titanium(IV), vanadium(V) or germanium(IV).

**10.** A process according to claim 5, **characterized in that** the intergrowth-promoting compounds are added by impregnating the seeded carrier before the synthesis, at the start of the synthesis time or toward the end of the synthesis time.

**11.** A process according to claim 6, **characterized in that** the intergrowth-promoting compounds are added in concentrations of 0.001-1N, preferably 0.01 to 0.1N.

**12.** The use of the membranes according to any one of claims 1 to 4 for size-selective separation of gas or vapor mixtures, for interactive separation of gas or vapor mixtures and for catalytic isomerization, cyclization, partial oxidation and in the cracking of gases, vapors or gas/vapor mixtures.

## Revendications

**1.** Membrane de tamis moléculaire à haut pouvoir de séparation pour gaz et vapeurs, **caractérisée en ce que** la membrane, consistant en une zéolite siliceuse ayant une proportion Si/A1 de 1:300, consiste dans la couche de surface du côté fonctionnel en pores de zéolite d'un diamètre de pores de l'ordre de 0,36 à 0,74 nm et est essentiellement exempte de mésopores, ceci mesuré par porosimétrie par perméation et perméation de gaz individuel, la membrane possède un pouvoir de séparation d'au moins 100 % au-delà du facteur de Knudsen et peut être préparée par cristallisation structurée ou non structurée du gel de synthèse sous forme de couche du côté fonctionnel d'un support à pores ouverts avec une structure de couches asymétrique, en système ouvert ou fermé, à une température de 50 à 250 °C et en présence de sels de polyammonium favorisant la croissance, solubles dans l'eau, chimiquement et thermiquement résistants jusqu'à 200 °C, aliphatiques ou aromatiques, comportant à chaque fois

au moins deux fonctions ammonium par molécule et d'un poids moléculaire de l'ordre de 100 à 1000 g/mole, et avec un traitement thermique subséquent à une température de 100 à 550 °C avec ouverture des pores de transport par désorption d'hydrogène et/ou par décomposition de la structure (matrice) et des composés favorisant la croissance jusqu'à obtention de la structure complète de tamis moléculaire.

**2.** Membrane suivant la revendication 1, **caractérisée en ce que** le $SiO_2$ du réseau est remplacé par un ou plusieurs autres hétéroatomes, les hétéroatomes étant choisis parmi l'aluminium(III), le bore(III), le fer(III), le titane(IV), le vanadium(V) et le germanium(IV).

**3.** Membrane suivant la revendication 1, **caractérisée en ce que** la proportion Si/A1 est de l'ordre de 1 à 300, de préférence de 1 à 100.

**4.** Membrane suivant la revendication 1, **caractérisée en ce que** qu'elle correspond au type LTA, FAU, ERI, MOR, OFF, CHA, ANA, FER ou ZSM-5, de préférence LTA, FAU ou MFI.

**5.** Procédé de préparation de membranes de tamis moléculaires suivant la revendication 1, par cristallisation structurée ou non structurée du gel de synthèse en tant que couche sur le côté fonctionnel d'un support à pores ouverts avec une structure de couches asymétrique dans un système ouvert ou fermé, à une température de 50 à 250 °C et avec un traitement thermique subséquent à une température de 100 à 550 °C, avec ouverture de voies de transport par désorption d'hydrogène et/ou décomposition de composés organiques non stables, **caractérisé en ce qu'**avant ou pendant la synthèse, on ajoute des sels de polyammonium favorisant la croissance, solubles dans l'eau, chimiquement et thermiquement résistants jusqu'à 200 °C, aliphatiques ou aromatiques, avec à chaque fois au moins deux fonctions ammonium par molécule et d'un poids moléculaire de l'ordre de 100 à 1000 g/mole.

**6.** Procédé suivant la revendication 5, **caractérisé en ce que** l'on ajoute, en tant que substances favorisant la croissance, des sels de polyammonium quaternaires ou ionènes à chaîne courte.

**7.** Procédé suivant la revendication 6, **caractérisé en ce que** les substances favorisant la croissance sont choisies dans le groupe formé par le diiodure de N,N,N',N'-tétraméthylpipérazonium, le diiodure d'hexaméthyléthylène-diammonium, le dihydroxyde d'hexaméthyléthylène-diammonium, le poly[chlorure de N,N-diméthyl-2-hydroxypropylène-(1,3)ammonium], des produits d'addition de diméthylamines aliphatiques en $C_2$ à $C_6$ avec du dibromométhane ou du dichlorure de p-xylidène, et leurs mélanges.

**8.** Procédé suivant la revendication 5, **caractérisé en ce que** l'on met en oeuvre en tant qu'anions des substances favorisant la croissance du chlorure, du bromure, de l'iodure ou de l'hydroxyde.

**9.** Procédé suivant la revendication 5, **caractérisé en ce que** le silicium est partiellement remplacé, dans le gel de synthèse, par de l'aluminium(III), du bore, du fer(III), du titane(IV), du vanadium(V) ou du germanium(IV).

**10.** Procédé suivant la revendication 5, **caractérisé en ce que** les composés favorisant la croissance sont ajoutés par imprégnation du support ensemencé avant la synthèse, au début du temps de synthèse ou à la fin du temps de synthèse.

**11.** Procédé suivant la revendication 6, **caractérisé en ce que** les composés favorisant la croissance sont ajoutés en des concentrations de 0,001 à 1 N, de préférence de 0,01 à 0,1 N.

**12.** Utilisation des membranes suivant l'une quelconque des revendications 1 à 4 pour la séparation hautement sélective de mélanges de gaz ou de vapeurs, pour la séparation interactive de mélanges de gaz ou de vapeurs et pour l'isomérisation, la cyclisation, l'oxydation partielle catalytiques ainsi que pour le craquage de gaz, de vapeurs ou de mélanges gaz/vapeurs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0515936 A
- US 5935646 A
- US 5554286 A


### In der Beschreibung aufgeführte Nicht-Patentliteratur


- **KITA; H.** *Proc..Intern.Workshop on Zeolitic Membranes and Films,* 1998, 43
- **BURGGRAAF et al.** Fundamentals of Inorganic Membrane Science Technology. Elsevier, 1996, 331-453
- **LASSINANTTI et al.** *Microp.Mesop.Mater.,* 2000, vol. 38, 25-34
- **WEH ; NOACK ; SIEBER ; CARO.** *Micropor.Mesopor. Mater.,* 2002, vol. 54, 27-36